# EUROPÄISCHE PATENTANMELDUNG

(11) **EP 2 348 473 A1**
(43) Veröffentlichungstag der Anmeldung: **27.07.2011**
(21) Anmeldenummer: 10175222.8
(22) Anmeldetag: 03.09.2010
(51) Int. Cl.: G06Q 20/00

(54) **Verfahren zum Bezahlen eines Angebots mittels elektronischer Werteinheiten; Transaktionssystem**

(30) Priorität: 12.10.2009 DE 102009049123
(71) Anmelder: Deutsche Post AG, 53113 Bonn (DE)
(72) Erfinder: Ulrich, Keith, 53227, Bonn-Oberkassel (DE); Josefiak, Frank, 53177, Bonn (DE)
(74) Vertreter: Jostarndt, Hans-Dieter

(57) **Zusammenfassung**

Die Erfindung betrifft ein Verfahren zum Bezahlen eines Angebots, das von einer zentralen Anbieter-Datenverarbeitungsanlage (21) eines Datenanbieters (20) über ein Datennetz einer Kunden-Datenverarbeitungsanlage (11) eines Kunden (10) bereitgestellt wird, wobei die Bezahlung mittels elektronischer Werteinheiten erfolgt, die einem Geldbetrag zugeordnet sind und die von einer Werteinheiten-Kasse des Kunden (10) bei einem Bezahl-Dienstleister (30) abgebucht werden, bei dem der Kunde (10) registriert ist. Die vom Kunden (10) erworbenen Werteinheiten können wie virtuelle Briefmarken zur Bezahlung von Angeboten im Internet eingesetzt werden, wobei der Kunde für eine Bezahlung jeweils wenigstens eine Transaktionsnummer verwendet, die dem Geldbetrag einer Werteinheit zugeordnet ist. Die Freigabe des Angebots erfolgt über einen verschlüsselten Freigabecode, den der Bezahl-Dienstleister (30) erzeugt und an den Anbieter (20) übermittelt, wobei der Bezahl-Dienstleister (30) den für das Angebot zu entrichtenden Geldbetrag an den Anbieter (20) überweist. Vorzugsweise wird als Werteinheiten-Kasse des Kunden (10) eine Portokasse verwendet, über die der Kunde bereits zur Bezahlung von digitalen Frankiervermerken bei dem Bezahl-Dienstleister (30) verfügt.

## Beschreibung

Die Erfindung betrifft ein Verfahren zum Bezahlen eines Angebots, das von einer zentralen Anbieter-Datenverarbeitungsanlage eines Datenanbieters über ein Datennetz einer Kunden-Datenverarbeitungsanlage eines Kunden bereitgestellt wird, wobei die Bezahlung mittels elektronischer Werteinheiten erfolgt, die einem Geldbetrag zugeordnet sind. Diese Werteinheiten werden von einer Werteinheiten-Kasse des Kunden bei einem Bezahl-Dienstleister abgebucht, bei dem der Kunde registriert ist.

Aus dem Stand der Technik ist es bekannt, für die Frankierung von Postsendungen elektronische Werteinheiten einzusetzen, die üblicherweise auch als digitale Frankiervermerke oder Freimachungsvermerke bezeichnet werden können. Ein solches System der Anmelderin sieht vor, dass ein Kunde bei einem Postdienstleister registriert ist und für ihn eine Portokasse geführt wird, die er mit dem Porto von verwendeten digitalen Frankiervermerken belasten kann. Die Frankiervermerke können auf unterschiedliche Arten erzeugt und dem Kunden an einer Datenverarbeitungsanlage zum Ausdruck beispielsweise als Matrixcode bereitgestellt werden. Dies kann beispielsweise über eine zentrale gehostete Web-Plattform des Postdienstleisters oder eine spezielle Software erfolgen, die auf der Datenverarbeitungsanlage des Kunden installiert ist, wobei diese Software wenigstens temporär Kontakt mit einer zentralen Datenverarbeitungsanlage des Postdienstleisters aufnehmen kann. Bei der Erzeugung und Bereitstellung des digitalen Frankiervermerks kommen insbesondere eine Benutzerverwaltung für einen personalisierten Zugang und Verschlüsselungstechniken und Sicherheitsmerkmale zum Einsatz, um sowohl für den Postdienstleister als auch für den Kunden eine sichere Abwicklung zu gewährleisten.

Die Bezahlung einer Briefmarke in Form eines digitalen Frankiervermerks erfolgt somit durch Abbuchung eines Portbetrags von der Portokasse des Kunden. Ausgehend von dieser Nutzung elektronischer Werteinheiten zur Bezahlung digitaler Frankiervermerke bestehen Bestrebungen, derartige Systeme und elektronische Werteinheiten auch zum Bezahlen von Angeboten im Internet zu nutzen.

Übliche Bezahlarten für Angebote im Internet sind die Kreditkartenzahlung, der Abbuchungsauftrag oder die Überweisung. Alle diese Bezahlarten haben jedoch bestimmte Nachteile, wobei die Kreditkartenzahlung und der Abbuchungsauftrag eine schnelle Transaktion ermöglichen, hierbei jedoch persönliche Bankinformationen über das Internet übermittelt werden, was ein Sicherheitsrisiko darstellt. Die Überweisung verringert dieses Risiko, verzögert den Erwerb eines Angebots jedoch erheblich, da das Angebot erst freigegeben wird, wenn die Zahlung beim Anbieter eingegangen ist. Dies hält Kunden insbesondere bei kleineren Beträgen von mehreren Euro üblicherweise vom Erwerb des Angebots ab. Daher besteht der Bedarf nach geeigneten alternativen Transaktionssystemen und Verfahren.

Derartige Bezahlsysteme sollten möglichst schnell arbeiten, um einen Kaufvorgang im Internet nicht erheblich zu verlangsamen. Ferner müssen sie natürlich für den Kunden einfach zu verwenden sein und ein hohes Maß an Sicherheit bieten, was insbesondere die Sicherheit von persönlichen Daten und Bankinformationen betrifft. Dazu zählt auch eine möglichst hohe Anonymität eines Kunden beim Kauf von Datenangeboten, um eine gegebenenfalls unerwünschte Zuordnung von Kunden zu bestimmten Datenangeboten zu verhindern. Ein viel genutztes System zum Bezahlen von Angeboten im Internet wird beispielsweise durch das Produkt PayPal® angeboten.

Aus der Deutschen Offenlegungsschrift DE 101 21 726 A1 ist ferner ein Verfahren und eine Anordnung zum Bezahlen von Datenangeboten von über ein Datennetz abrufbaren Datenangeboten bekannt. Dieses Verfahren geht aus vom Verfahren der Anmelderin zum Frankieren von Postsendungen, das auch als Produkt STAMPIT bekannt ist. Dabei werden elektronische Werteinheiten für eine Bezahlung bereitgestellt, nachdem über ein Datennetz wie das Internet eine Verbindung hergestellt wurde.

Ferner ist aus der Deutschen Offenlegungsschrift DE 103 23 097 A1 ein Verfahren und eine Anordnung zur Etablierung eines kostenpflichtigen E-Mail-Dienstes bekannt, bei dem ebenfalls wie bei einer Online-Briefmarke elektronische Werteinheiten zur Bezahlung von E-Mail- und/oder SMS-Diensten verwendet werden. Dies gilt ebenso für die Deutsche Offenlegungsschrift DE 10 2004 059 893 A1, aus der ein Verfahren bekannt ist, bei dem digitales Geld in Form einer E-Briefmarke einer E-Mail beigefügt wird, um sie gegenüber einem Empfänger als vertrauenswürdig zu kennzeichnen. Dieses digitale Geld kann bei einem dafür eingerichteten Verkaufs-Server gekauft, eingetauscht und zurückgegeben werden.

Aufgabe der Erfindung ist es, ein Verfahren zum Bezahlen eines Angebots im Internet mittels elektronischer Werteinheiten bereitzustellen, das für den Kunden einfach zu verwenden ist und einen hohen Grad an Anonymität des Kunden gegenüber beteiligten Dritten bietet.

Erfindungsgemäß wird diese Aufgabe durch ein Verfahren mit den Merkmalen des unabhängigen Anspruchs 1 gelöst. Vorteilhafte Weiterbildungen des Verfahrens ergeben sich aus den Unteransprüchen 2-11. Die Aufgabe wird ferner durch ein zugehöriges Transaktionssystem mit Komponenten zur Durchführung des Verfahrens nah Anspruch 12 gelöst.

Dem erfindungemäßen Verfahren liegt die Idee zugrunde, die Bezahlung eines Angebots im Internet ähnlich wie die Bezahlung von Angeboten im sonstigen Warenverkehr durch virtuelle Briefmarken durchzuführen, wie es früher bei kleineren Beträgen durchaus üblich war. Insbesondere bei Anbindung des zugehörigen Transaktionssystems an ein System zur Erzeugung und Abrechnung von digitalen Frankiervermerken können die für die Bezahlung verwendeten Werteinheiten als virtuelle Briefmarken angesehen werden.

Das erfindungsgemäße Verfahren zum Bezahlen eines Angebots gemäß dem Oberbegriff des Anspruchs 1 zeichnet sich durch die folgenden Schritte aus:
a) Bereitstellung wenigstens einer Transaktionsnummer für den Kunden durch den Bezahl-Dienstleister, wobei die Transaktionsnummer einer elektronischen Werteinheit zugeordnet ist, deren Geldwert von der Werteinheiten-Kasse des Kunden bei dem Bezahl-Dienstleister abgebucht wird,
b) Zugriff der Kunden-Datenverarbeitungsanlage über das Datennetz auf die zentrale Anbieter-Datenverarbeitungsanlage und Auswahl des Angebots;
c) Bereitstellung einer eindeutigen Angebots-Identifikation für das ausgewählte Angebot durch die zentrale Anbieter-Datenverarbeitungsanlage, wobei diese eindeutige Angebots-Identifikation wenigstens eine Angebotsinformation beinhaltet,
d) Übermittelung der eindeutigen Angebots-Identifikation von der Anbieter-Datenverarbeitungsanlage über das Datennetz an eine Bezahl-Datenverarbeitungsanlage des Bezahl-Dienstleisters,
e) Ermittelung wenigstens der Angebotsinformation aus der eindeutigen Angebots-Identifikation durch die Bezahl-Datenverarbeitungsanlage des Bezahl-Dienstleisters und Ermittelung einer Preisinformation mit einem Geldbetrag, der dem ausgewählten Angebot zugeordnet ist,
f) Freigabe wenigstens einer elektronischen Werteinheit für das ausgewählte Angebot durch den Kunden an der Bezahl-Datenverarbeitungsanlage durch Eingabe wenigstens einer Transaktionsnummer über das Datennetz, wobei der der wenigstens einen Transaktionsnummer zugeordnete Geldwert wenigstens dem Geldbetrag der Preisinformation entspricht,
g) Erzeugung eines verschlüsselten Datensatzes durch die Bezahl-Datenverarbeitungsanlage, wobei der verschlüsselte Datensatz wenigstens die Angebotsinformation enthält,
h) Übertragung des verschlüsselten Datensatzes als Freigabecode von der Bezahl-Datenverarbeitungsanlage über das Datennetz an die zentrale Anbieter-Datenverarbeitungsanlage,
i) Übertragung wenigstens einer elektronischen Werteinheit von einer Werteinheiten-Kasse der Bezahl-Datenverarbeitungsanlage an eine Werteinheiten-Kasse des Datenanbieters, wobei die Summe der den Werteinheiten zugeordneten Geldbeträge wenigstens dem Geldbetrag der ermittelten Preisinformation entspricht,
j) Ermittelung der Angebotsinformation aus dem Freigabecode durch die Anbieter-Datenverarbeitungsanlage und Zuordnung des Freigabecodes zu dem Angebot mittels der extrahierten Angebotsinformation,
k) Auswertung des Freigabecodes durch die Anbieter-Datenverarbeitungsanlage und Freigabe des Angebots für den Kunden, falls der Freigabecode von der Anbieter-Datenverarbeitungsanlage als gültig erkannt wird.

Hierbei ist unter einer Transaktionsnummer eine beliebige Identifikationsnummer bzw. Zahlen- und/oder Buchstabenfolge zu verstehen, die einer Werteinheit zugeordnet wird.

Das Verfahren hat den wesentlichen Vorteil, dass der Kunde gegenüber dem Anbieter eines Angebots im Internet anonym bleibt, da dieser keine Informationen über den Kunden und insbesondere keine Bankinformationen wie Kontonummern, etc. erhält. Dies stellt gegenüber einer Kreditkartenzahlung oder einem Abbuchungsauftrag einen wesentlichen Vorteil dar. Der Bezahl-Dienstleister muss wiederum keine Informationen über den Inhalt des Angebots erhalten, das sein Kunde erwerben möchte, da eine eindeutige Angebots-Identifikation beispielsweise in Form einer Zahlen- und/oder Buchstabenfolge zur Identifizierung des Angebots für die jeweilige Transaktion ausreicht.

Ferner stellt der Freigabecode eine einfache und schnelle Möglichkeit dar, um ein Angebot beim Anbieter frei zu schalten. Da die zur Bezahlung verwendeten Werteinheiten (Transaktionsnummern) bereits wie Briefmarken vom Kunden bezahlt wurden, muss bei der Transaktion selbst kein Geldtransfer mehr vom Kunden aus stattfinden, sondern die Bezahlung kann schnell durch den Bezahl-Dienstleister durchgeführt werden. Da zwischen dem Bezahl-Dienstleister und dem Anbieter eine Kooperation besteht, liegt hier ein Vertrauensverhältnis vor, während zwischen dem Kunden und dem Bezahl-Dienstleister ebenso ein Vertrauensverhältnis vorliegt, was insbesondere dann gegeben ist, wenn der Kunde den Dienstleister auch zur Erzeugung von digitalen Frankiervermerken nutzt.

Vorzugsweise erfolgt vor der Freigabe einer Werteinheit durch den Kunden eine Authentifizierung des Kunden an der Bezahl-Datenverarbeitungsanlage, was die Sicherheit des Verfahrens zusätzlich erhöht, da nur Personen, die sich authentifizieren können und im Besitz einer Transaktionsnummer für eine Werteinheit sind, eine Bezahlung durchführen können.

Vorzugsweise ist das Angebot ein Datenangebot, und die Freigabe des Angebots für den Kunden umfasst den Download des Datenangebots von einer Internetseite des Anbieters. Dabei kann die Anbieter-Datenverarbeitungsanlage dem Kunden das Angebot auf der Anbieter-Datenverarbeitungsanlage direkt freigeben, oder die Anbieter-Datenverarbeitungsanlage gibt dem Bezahl-Dienstleister das Angebot auf der Anbieter-Datenverarbeitungsanlage frei, und der Bezahl-Dienstleister gibt dann indirekt das Angebot dem Kunden frei.

In einem bevorzugten Ausführungsbeispiel der Erfindung ist die Bezahl-Datenverarbeitungsanlage so ausgestaltet, dass sie verschlüsselte Datensätze für digitale Frankiervermerke erzeugen kann, welche der Kunden-Datenverarbeitungsanlage für den Ausdruck eines digitalen Frankiervermerks übermittelt werden, wobei der verschlüsselte Datensatz für den Freigabecode die gleiche Struktur hat wie ein verschlüsselter Datensatz für einen digitalen Frankiervermerk. Dadurch kann ein Verschlüsselungsmodul sowohl für die Erzeugung von digitalen Frankiervermerken als auch für die Erzeugung von Freigabecodes für die Freischaltung von Angeboten im Internet genutzt werden. Dem Anbieter von Dienstleistungen im Bereich der digitalen Frankierung erschließen sich dadurch neue Vertriebswege, wobei es für den Kunden sehr einfach ist, an beiden Systemen teilzunehmen, ohne sich mehrmals registrieren zu müssen.

In einem Ausführungsbeispiel der Erfindung umfasst die eindeutige Angebots-Identifikation bereits eine Preisinformation mit einem Geldbetrag, welcher dem ausgewählten Angebot zugeordnet ist, und die Bezahl-Datenverarbeitungsanlage des Bezahl-Dienstleisters ermittelt diese Preisinformation aus der Angebots-Identifikation. In einem anderen Ausführungsbeispiel der Erfindung liegt in der Bezahl-Datenverarbeitungsanlage des Bezahl-Dienstleisters eine Zuordnung zwischen Angebotsinformationen und/oder eindeutigen Angebots-Identifikationen und zugeordneten Preisinformationen mit jeweils einem Geldbetrag vor, und die Bezahl-Datenverarbeitungsanlage ermittelt aus dieser Zuordnung die Preisinformation mit einem Geldbetrag, die den empfangenen Angebotsinformationen und/oder eindeutigen Angebots-Identifikationen zugeordnet ist.

Vorzugsweise ist der Freigabecode nur einmalig zur Freigabe des Angebots nutzbar. Beispielsweise kann der Freigabecode nur für ein definiertes Zeitintervall nutzbar sein, oder er enthält Informationen, durch die er nach einmaliger Nutzung als ungültig gekennzeichnet wird.

Von der Erfindung umfasst ist ferner ein Transaktionssystem zum Bezahlen eines Angebots, wenigstens umfassend eine Kunden-Datenverarbeitungsanlage, eine Anbieter-Datenverarbeitungsanlage und eine Bezahl-Datenverarbeitungsanlage, die über ein Datennetz miteinander verbindbar sind. Die Kunden-Datenverarbeitungsanlage, die Anbieter-Datenverarbeitungsanlage und die Bezahl-Datenverarbeitungsanlage weisen jeweils Mittel zur Durchführung des erfindungsgemäßen Verfahrens auf.

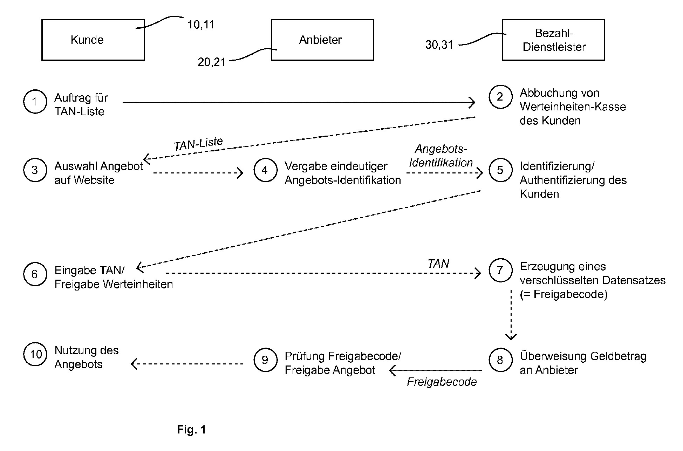

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildung in Fig. 1. Diese Fig. 1 zeigt eine schematische Darstellung der wesentlichen Schritte des erfindungsgemäßen Verfahrens, wobei die Anzahl und die Reihenfolge der einzelnen Schritte nicht einschränkend zu verstehen sind. Es können insbesondere weitere Schritte ergänzt oder durch andere Schritte ersetzt werden.

An dem erfindungsgemäßen Verfahren sind wenigstens ein Kunde 10, ein Anbieter 20 und ein Bezahl-Dienstleister 30 beteiligt. Welche Schritte im Bereich welches Teilnehmers ablaufen, ist in Fig. 1 im Wesentlichen dadurch dargestellt, dass die betreffenden Schritte unterhalb der Teilnehmer angeordnet sind. Der Kunde 10 beteiligt sich am dem Verfahren über eine Kunden-Datenverarbeitungsanlage 11, bei der es sich beispielsweise um einen fest installierten PC, ein Laptop, ein Smartphone, etc. handeln kann. Über diese Kunden-Datenverarbeitungsanlage 11 hat der Kunde Zugriff auf ein Datennetz wir das Internet. Über das Internet hat der Kunde 10 Zugriff auf die Angebote eines Anbieters 20 auf eine Anbieter-Datenverarbeitungsanlage 21. Bei der Anbieter-Datenverarbeitungsanlage 21 handelt es sich vorzugsweise um einen zentralen Server, auf dem beispielsweise eine Internetseite des Anbieters betrieben wird.

Bei den Angeboten des Anbieters 20 handelt es sich vorzugsweise um Angebote, die gegen Bezahlung kleinerer Geldbeträge zum Download bereitgestellt werden. Hierbei handelt es sich beispielsweise um Online-Zeitungsartikel, Musikstücke und Videos. Möglich ist es aber auch, die erfindungsgemäße Bezahlmethode zur Bezahlung von kleineren Beträgen in Webshops oder von postalischen Dienstleistungen wie Nachsendeaufträgen, Paketabholungen, etc. einzusetzen. Besonders vorteilhaft hat sich das erfindungsgemäße Verfahren jedoch für den Abruf von Dateninhalten aus dem Internet erwiesen.

Am Verfahren beteiligt ist ferner ein Bezahl-Dienstleister 30, der seinerseits eine Bezahl-Datenverarbeitungsanlage 31 betreibt und auch über das Internet mit der Kunden-Datenverarbeitungsanlage 11 und der Anbieter-Datenverarbeitungsanlage 21 verbindbar ist. Auch hierbei kann es sich um einen zentralen Server handeln, der eine Web-Plattform mit einem User-Frontend hostet. Beim Bezahl-Dienstleister 30 sind mehrere Kunden registriert und jeder Kunde verfügt über eine persönliche Werteinheiten-Kasse, die von dem jeweiligen Kunden für Transaktionen genutzt werden kann.

Die Realisierung des erfindungsgemäßen Verfahrens erfolgt auf der Seite des Bezahl-Dienstleisters 30 vorzugsweise über ein System zur Erzeugung von digitalen Frankiervermerken, wie es beispielsweise auch durch das Produkt STAMPIT der Anmelderin gegeben ist. Bei diesem bekannten Verfahren erzeugt ein in einem Kundensystem integriertes kryptographisches Modul eine verschlüsselte Zufallszahl und eine Identifikationsnummer. Ein Ladezentrum entschlüsselt die Zufallszahl und die Identifikationsnummer. Hierdurch erfolgt eine Identifizierung des Kunden beziehungsweise des von dem Kunden eingesetzten Kundensystems. Anschließend verschlüsselt das Ladezentrum die Zufallszahl und eine Vorgabe-Identifikationsnummer und übermittelt diese an das Kundensystem. Anschließend erzeugt das Kundensystem Datensätze für Freimachungsvermerke, welche die verschlüsselte Zufallszahl und die gleichfalls verschlüsselte Vorgabe-Identifikationsnummer enthalten.

STAMPIT besteht dabei aus einer auf dem PC eines jeden STAMPIT-Kunden installierten Software namens "STAMPIT Client" und einem in einem Rechenzentrum betriebenen Zentralsystem namens "STAMPIT Server". Der STAMPIT Client dient als Bedieneinheit und der STAMPIT Server als Frankiereinheit. Beide Einheiten sind über das Internet miteinander verbunden. Möchte ein Kunde eine Frankierung erstellen, so wird eine Anfrage über die Netzwerkverbindung vom STAMPIT Client an den STAMPIT Server gesendet. Letzterer erstellt den Frankiervermerk in einem hochsicheren kryptographischen Modul als elektronische Bytefolge. Nach der Rückübertragung dieser Bytefolge vom STAMPIT Server zum STAMPIT Client erfolgt dort die Umwandlung der kryptographisch abgesicherten Bytefolge in einen maschinenlesbaren Barcode sowie der Ausdruck dieses Barcodes zusammen mit anderen Angaben zu einem gültigen PC-Frankiervermerk.

In einer anderen Ausführungsform ist auf Seite des Kunden keine spezielle Software erforderlich, sondern der Vorgang wird über den Web Browser des Kunden und eine Online-Applikation abgewickelt. Dies hat den Vorteil, dass der Kunde keine eigene Software installieren muss und von jeder beliebigen Datenverarbeitungsanlage digitale Frankiervermerke erzeugen und auf Postsendungen ausdrucken kann. Beiden Ausführungsformen gemeinsam ist jedoch, dass ein verschlüsselter Datensatz für einen digitalen Frankiervermerk erzeugt wird und es sich um einen Kunden 10 handelt, der bei dem Bezahl-Dienstleister 30 registriert ist. Vorzugsweise ist dies der Postdienstleister, der auch das Frankieren von Postsendungen mittels digitaler Frankiervermerke anbietet. Dies stellt jedoch nur ein bevorzugtes Ausführungsbeispiel der Erfindung dar, anhand dessen das erfindungsgemäße Verfahren erläutert werden soll. Der Bezahl-Dienstleister 30 kann grundsätzlich jeder Dienstleister sein, bei dem ein Kunde registriert ist und bei dem eine persönliche Werteinheiten-Kasse für den Kunden geführt wird. Besonders einfach lässt sich die Erfindung jedoch mit einer bereits bestehenden Werteinheiten-Kasse, d.h. einer Portokasse eines Postdienstleisters realisieren. In diesem Fall ist keine zusätzliche Registrierung des Kunden erforderlich, was das Verfahren für den Kunden besonders einfach macht.

Der registrierte Kunde 10 verfügt vorzugsweise über die Möglichkeit, sich gegenüber dem Bezahl-Dienstleister 30 zu identifizieren und authentifizieren, was beispielsweise über eine Kunden-ID und/oder ein Passwort erfolgen kann. Ferner hat der Kunde die Möglichkeit, seine Werteinheiten-Kasse mit Geldbeträgen aufzuladen. Dies kann durch Einzahlung von Geldbeträgen oder durch Abbuchung von einem weiteren Kundenkonto (Referenzkonto) erfolgen. Ist die Werteinheiten-Kasse mit einem Mindestbetrag gefüllt, kann sich der Kunde für den erfindungsgemäßen Bezahldienst registrieren lassen. Ist die Werteinheiten-Kasse eine Portokasse zur Bezahlung von digitalen Frankiervermerken, registriert sich der Kunde dabei zusätzlich zur Nutzung der Portokasse für die Bezahlung von Datenangeboten im Internet.

Nach der Registrierung erhält der Kunde in einem Ausführungsbeispiel der Erfindung in einem ersten Schritt 1 eine Liste mit alphanumerischen Zahlen. Die alphanumerischen Zahlen stellen Transaktionsnummern (TAN) dar, mit denen der Kunde die Bezahlung von Datenangeboten über das Internet bewirken kann. Hinter den TANs ist vorzugsweise der Wert einer Briefmarke in codierter Form hinterlegt, so dass jeder TAN ein Geldwert zugeordnet ist. Der Kunde kann eine TAN-Liste in beliebiger Höhe erhalten, soweit der so repräsentierte Geldwert von seiner Werteinheiten-Kasse gedeckt ist. Nach Erzeugung der TAN-Liste für den Kunden wird der entsprechende Betrag in einem Schritt 2 von seiner Werteinheiten-Kasse abgebucht. Der Kunde erwirbt somit durch die TAN-Liste virtuell Briefmarken, die er zu einem späteren Zeitpunkt für die Bezahlung von Datenangeboten im Internet verwenden kann.

Die Erfindung soll in Fig. 1 beispielhaft anhand der Bezahlung eines Datenangebots auf einer Website eines Anbieters 20 erläutert werden. Besucht der Kunde die Website eines solchen Datenanbieters, liegt wenigstens ein Datenangebot auf der zentralen Anbieter-Datenverarbeitungsanlage 21 für den Kunden 10 bereit. Wählt der Kunde auf der Website in einem Schritt 3 ein Datenangebot aus, wird ihm angezeigt, dass die erfindungsgemäße Bezahlmethode für dieses Datenangebot zur Verfügung steht. Der Website-Betreiber und Datenanbieter 20 ist somit mit dem Bezahl-Dienstleister 30 eine Kooperation eingegangen, wobei sich der Datenanbieter 20 damit einverstanden erklärt, eine Bezahlung seiner Datenangebote über das Bezahlsystem zu ermöglichen und die technischen Voraussetzungen für eine solche Bezahlung zu erfüllen. Wählt der Kunde für ein Datenangebot die erfindungsgemäße Bezahlung, ist beispielsweise eine technische Voraussetzung, dass der Kunde 10 durch einen Link auf eine Anwendung des Bezahl-Dienstleisters 30 geleitet wird, um die Bezahlung vorzunehmen. Auf der Website des Bezahl-Dienstleisters 30 kann der Kunde sich über eine ID und/oder ein Passwort identifizieren und/oder authentifizieren (Schritt 5). Hierbei handelt es sich vorzugsweise um die gleichen Zugangsdaten, die der Kunde auch für der Erwerb und die Erzeugung von digitalen Frankiervermerken über seine Portokasse verwenden würde.

Ferner ist es erforderlich, dass die Anbieter-Datenverarbeitungsanlage 21 im Schritt 4 eine eindeutige Angebots-Identifikation an die Bezahl-Datenverarbeitungsanlage 31 übermittelt. Diese Angebots-Identifikation enthält wenigstens Angebotsinformationen, über welche das ausgewählte Angebot für die betreffende Transaktion identifizierbar ist. Zusätzlich kann die eindeutige Angebots-Identifikation auch bereits eine Preisinformation mit einem Geldbetrag umfassen, der für das ausgewählte Datenangebot zu entrichten ist, so dass diese von der Bezahl-Datenverarbeitungsanlage 31 aus der Angebots-Identifikation extrahiert werden kann. Dies hat auch den Vorteil, dass der Anbieter den Preis für sein Angebot flexibel ändern und beispielsweise an die jeweilige Transaktion bzw. den Kunden anpassen kann, so dass die eindeutige Angebots-Identifikation jeweils die aktuellen Preisinformationen enthält, die dann von der Bezahl-Datenverarbeitungsanlage 31 ermittelt werden können.

Dabei enthält diese Angebots-Identifikation jedoch vorzugsweise keine Informationen über den Inhalt des Datenangebots, wenn dieser dem Bezahl-Dienstleister 30 nicht preisgegeben werden soll. Vorzugsweise umfasst die Angebots-Identifikation daher nur eine Nummern- und/oder Zahlenfolge, um wenigstens das Angebot für die Transaktion zu identifizieren. Dadurch wird der Inhalt des Datenangebots gegenüber dem Bezahl-Dienstleister 30 nicht preisgegeben, was die Anonymität des Verfahrens erhöht.

Die Bezahl-Datenverarbeitungsanlage 31 empfängt die Angebots-Identifikation und falls diese bereits Preisinformation mit einem für das betreffende Datenangebot zu entrichtenden Geldbetrag umfasst, wird dieser Geldbetrag extrahiert. Enthält die Angebots-Identifikation keine Preisinformation, ermittelt die Bezahl-Datenverarbeitungsanlage 31 anhand der Angebots-Identifikation und/oder der Angebotsinformationen einen zugeordneten Geldbetrag. Beispielsweise hat der Datenanbieter 20 der Bezahl-Datenverarbeitungsanlage 31 dazu vorab Angebots-Identifikationen bereitgestellt und den Angebots-Identifikationen Geldbeträge zugeordnet. Die Bezahl-Datenverarbeitungsanlage 31 verfügt somit über eine Zuordnung zwischen allen möglichen Angebots-Identifikationen und den zugeordneten Preisinformationen, so dass sie eigenständig anhand der empfangenen Angebots-Identifikation den für das betreffende Datenangebot zu entrichtenden Geldbetrag ermitteln kann.

Der zu entrichtende Geldbetrag wird dem Kunden 10 angezeigt, so dass er nun die Transaktion durch Eingabe wenigstens einer TAN bestätigen kann (Schritt 6). Da jeder TAN seiner Liste ein Geldbetrag zugeordnet ist, kann es erforderlich sein, dass der Kunde mehrere Transaktionsnummern eingeben muss, um den zu entrichtenden Geldbetrag zu erreichen.

Bei Erhalt der vom Kunden 10 eingegebenen Transaktionsnummern an der Bezahl-Datenverarbeitungsanlage 31 über das Internet wird überprüft, ob diese bzw. die zugeordneten Geldbeträge zur Bezahlung des zu entrichtenden Geldbetrags ausreichen. Ist dies nicht der Fall, wird der Kunde zur Eingabe weiterer Transaktionsnummern aufgefordert. Sobald die ausreichende Anzahl von Transaktionsnummern eingegeben wurde bzw. die damit verbundenen Geldbeträge wenigstens dem zu entrichtenden Geldbetrag entsprechen, erzeugt die Bezahl-Datenverarbeitungsanlage 31 in Schritt 7 einen verschlüsselten Datensatz als Freigabecode. In dem Freigabecode ist wenigstens die Angebots-Identifikation und/oder Angebotsinformation des frei zu schaltenden Datenangebots verschlüsselt.

Die Bezahl-Datenverarbeitungsanlage 31 ist dabei vorzugsweise so ausgestaltet, dass sie auch verschlüsselte Datensätze für digitale Frankiervermerke erzeugen kann, welche der Kunden-Datenverarbeitungsanlage 11 für einen späteren Ausdruck eines digitalen Frankiervermerks übermittelt werden. Ein verschlüsselter Datensatz für den Freigabecode hat dabei die gleiche Struktur wie ein verschlüsselter Datensatz für einen digitalen Frankiervermerk, so dass das Verschlüsselungsmodul sowohl zur Erzeugung von digitalen Freimachungsvermerken als auch für die Erzeugung von Freigabecodes für Datenangebote Dritter verwendet werden kann.

Der so erzeugte Freigabecode wird im Schritt 9 über das Internet an die Anbieter-Datenverarbeitungsanlage 21 übertragen, während vor oder nach dieser Übermittelung die Übertragung wenigstens einer elektronischen Werteinheit an eine Werteinheiten-Kasse des Datenanbieters 20 erfolgt, wobei die Summe der den Werteinheiten zugeordneten Geldbeträge wenigstens dem Geldbetrag der ermittelten Preisinformation entspricht (Schritt 8). Der Datenanbieter 20 verfügt somit über ein Konto (Account), dem der entsprechende Geldbetrag von dem Bezahl-Dienstleister 31 gutgeschrieben wird. Die Überweisung erfolgt dabei nicht von der Werteinheiten-Kasse des Kunden 10, sondern von einer Kasse des Bezahl-Dienstleisters 31. Der Datenanbieter 20 erhält somit keine Informationen über die Identität des Kunden, sondern gegenüber dem Datenanbieter 20 bleibt der Kunde 10 vorzugsweise anonym.

Die Anbieter-Datenverarbeitungsanlage 21 ermittelt aus dem Freigabecode die darin enthaltene Angebotsinformation und ordnet dem Freigabecode so das zugeordnete Datenangebot zu. Der Freigabecode wird ausgewertet und wird er von der Anbieter-Datenverarbeitungsanlage 21 als gültiger Freigabecode erkannt, wird das betreffende Datenangebot im Schritt 9 freigegeben, was beispielsweise den Download des Datenangebots über das Internet beinhalten kann. Handelt es sich bei dem Angebot nicht um ein Datenangebot, sondern beispielsweise um die Gebühr für einen Nachsendeantrag oder eine sonstige Dienstleistung, wird diese frei geschaltet, wobei sich die Inanspruchnahme des Angebots entsprechend auf unterschiedliche Weise gestalten kann. In Schritt 10 nutzt der Kunde 10 das betreffende Datenangebot und lädt sich beispielsweise über das Internet einen Online-Zeitungsartikel auf seine Kunden Datenverarbeitungsanlage 11 herunter.

Bei der Freigabe des Angebots können wenigstens zwei Varianten zur Anwendung kommen. In einer ersten Ausführungsform gibt die Anbieter-Datenverarbeitungsanlage 21 dem Kunden 10 das Angebot direkt über die Anbieter-Datenverarbeitungsanlage 21 frei. In einer zweiten Ausführungsform gibt die Anbieter-Datenverarbeitungsanlage 21 dem Bezahl-Dienstleister 30 das Angebot auf der Anbieter-Datenverarbeitungsanlage 21 frei, und der Bezahl-Dienstleister 30 gibt wiederum das Angebot dem Kunden 10 frei bzw. übermittelt es an den Kunden.

Der Freigabecode ist dabei zweckmäßigerweise nur einmalig nutzbar und verliert nach Einlösung seine Gültigkeit. Das Angebot kann somit nur mit einem gültigen Freigabecode frei geschaltet werden, und die Gültigkeit muss von der Anbieter-Datenverarbeitungsanlage 21 stets geprüft werden. Die Gültigkeit kann beispielsweise auf einen bestimmten Zeitraum begrenzt sein, oder der vergebene Freigabecode enthält Informationen, die eine Entwertung des Codes nach der Benutzung ermöglichen.

Für die Dienstleistung des Bezahl-Dienstleisters 30 kann eine Gebühr erhoben werden, die dem Kunden 10 und/oder dem Anbieter 20 in Rechnung gestellt werden kann. Diese Gebühr kann beispielsweise pro Transaktion erhoben werden, oder durch eine einmalige Zahlung bei Übermittelung der TAN-Liste an den Kunden beglichen werden. Ferner können rechtliche Gegebenheiten dazu führen, dass bestimmte buchhalterische Bedingungen erfüllt und in einem Backend-System verwirklicht werden müssen.

Um die Fälschungssicherheit zu erhöhen, kann es vorgesehen sein, dass nur Beträge bis zu einer definierten Höhe mit dem erfindungsgemäßen Zahlsystem abgewickelt werden können.

### Bezugszeichenliste:

- 10: Kunde
- 11: Kunden-Datenverarbeitungsanlage

- 20: Anbieter, Datenanbieter, Website-Betreiber
- 21: Anbieter-Datenverarbeitungsanlage

- 30: Bezahl-Dienstleister
- 31: Bezahl-Datenverarbeitungsanlage

## Patentansprüche

1. Verfahren zum Bezahlen eines Angebots, das von einer zentralen Anbieter-Datenverarbeitungsanlage (21) eines Datenanbieters (20) über ein Datennetz einer Kunden-Datenverarbeitungsanlage (11) eines Kunden (10) bereitgestellt wird, wobei die Bezahlung mittels elektronischer Werteinheiten erfolgt, die einem Geldbetrag zugeordnet sind und die von einer Werteinheiten-Kasse des Kunden (10) bei einem Bezahl-Dienstleister (30) abgebucht werden, bei dem der Kunde (10) registriert ist, und das Verfahren wenigstens die folgenden Schritte umfasst:
l) Bereitstellung wenigstens einer Transaktionsnummer für den Kunden durch den Bezahl-Dienstleister (30), wobei die Transaktionsnummer einer elektronischen Werteinheit zugeordnet ist, deren Geldwert von der Werteinheiten-Kasse des Kunden (10) bei dem Bezahl-Dienstleister (30) abgebucht wird,
m) Zugriff der Kunden-Datenverarbeitungsanlage (11) über das Datennetz auf die zentrale Anbieter-Datenverarbeitungsanlage (21) und Auswahl des Angebots;
n) Bereitstellung einer eindeutigen Angebots-Identifikation für das ausgewählte Angebot durch die zentrale Anbieter-Datenverarbeitungsanlage (21), wobei diese eindeutige Angebots-Identifikation wenigstens eine Angebotsinformation beinhaltet,
o) Übermittelung der eindeutigen Angebots-Identifikation von der Anbieter-Datenverarbeitungsanlage (21) über das Datennetz an eine Bezahl-Datenverarbeitungsanlage (31) des Bezahl-Dienstleisters (30),
p) Ermittelung wenigstens der Angebotsinformation aus der eindeutigen Angebots-Identifikation durch die Bezahl-Datenverarbeitungsanlage (31) des Bezahl-Dienstleisters (30) und Ermittelung einer Preisinformation mit einem Geldbetrag, der dem ausgewählten Angebot zugeordnet ist,
q) Freigabe wenigstens einer elektronischen Werteinheit für das ausgewählte Angebot durch den Kunden (30) an der Bezahl-Datenverarbeitungsanlage (31) durch Eingabe wenigstens einer Transaktionsnummer über das Datennetz, wobei der der wenigstens einen Transaktionsnummer zugeordnete Geldwert wenigstens dem Geldbetrag der Preisinformation entspricht,
r) Erzeugung eines verschlüsselten Datensatzes durch die Bezahl-Datenverarbeitungsanlage (31), wobei der verschlüsselte Datensatz wenigstens die Angebotsinformation enthält,
s) Übertragung des verschlüsselten Datensatzes als Freigabecode von der Bezahl-Datenverarbeitungsanlage (31) über das Datennetz an die zentrale Anbieter-Datenverarbeitungsanlage (21),
t) Übertragung wenigstens einer elektronischen Werteinheit von einer Werteinheiten-Kasse der Bezahl-Datenverarbeitungsanlage (31) an eine Werteinheiten-Kasse des Datenanbieters (20), wobei die Summe der den Werteinheiten zugeordneten Geldbeträge wenigstens dem Geldbetrag der ermittelten Preisinformation entspricht,
u) Ermittelung der Angebotsinformation aus dem Freigabecode durch die Anbieter-Datenverarbeitungsanlage (21) und Zuordnung des Freigabecodes zu dem Angebot mittels der extrahierten Angebotsinformation,
v) Auswertung des Freigabecodes durch die Anbieter-Datenverarbeitungsanlage (21) und Freigabe des Angebots für den Kunden (10), falls der Freigabecode von der Anbieter-Datenverarbeitungsanlage (21) als gültig erkannt wird.

2. Verfahren nach Anspruch 1,
**dadurch gekennzeichnet,**
**dass** das Angebot ein Datenangebot ist und die Freigabe des Angebots für den Kunden (10) den Download des Datenangebots von einer Internetseite des Anbieters (20) umfasst.

3. Verfahren nach einem der Ansprüche 1 und 2,
**dadurch gekennzeichnet,**
**dass** vor der Freigabe einer Werteinheit durch den Kunden (10) eine Authentifizierung des Kunden (10) an der Bezahl-Datenverarbeitungsanlage (31) erfolgt.

4. Verfahren nach einem der Ansprüche 1 bis 3,
**dadurch gekennzeichnet,**
**dass** die Anbieter-Datenverarbeitungsanlage (21) dem Kunden (20) das Angebot auf der Anbieter-Datenverarbeitungsanlage (21) freigibt.

5. Verfahren nach einem der Ansprüche 1 bis 4,
**dadurch gekennzeichnet,**
**dass** die Anbieter-Datenverarbeitungsanlage (21) dem Bezahl-Dienstleister (30) das Angebot auf der Anbieter-Datenverarbeitungsanlage (21) freigibt, und der Bezahl-Dienstleister (30) das Angebot dem Kunden (10) freigibt.

6. Verfahren nach einem der Ansprüche 1 bis 5,
**dadurch gekennzeichnet,**
**dass** die Bezahl-Datenverarbeitungsanlage (31) so ausgestaltet ist, dass sie verschlüsselte Datensätze für digitale Frankiervermerke erzeugen kann, welche der Kunden-Datenverarbeitungsanlage (11) für den Ausdruck eines digitalen Frankiervermerks übermittelt werden, wobei der verschlüsselte Datensatz für den Freigabecode die gleiche Struktur hat wie ein verschlüsselter Datensatz für einen digitalen Frankiervermerk.

7. Verfahren nach einem der Ansprüche 1 bis 6,
**dadurch gekennzeichnet,**
**dass** die eindeutige Angebots-Identifikation eine Preisinformation mit einem Geldbetrag umfasst, welcher dem ausgewählten Angebot zugeordnet ist, und die Bezahl-Datenverarbeitungsanlage (31) des Bezahl-Dienstleisters (30) diese Preisinformation aus der Angebots-Identifikation ermittelt.

8. Verfahren nach einem der Ansprüche 1 bis 6,
**dadurch gekennzeichnet,**
**dass** in der Bezahl-Datenverarbeitungsanlage (31) des Bezahl-Dienstleisters (30) eine Zuordnung zwischen Angebotsinformationen und/oder eindeutigen Angebots-Identifikationen und zugeordneten Preisinformationen mit jeweils einem Geldbetrag vorliegt, und die Bezahl-Datenverarbeitungsanlage (31) aus dieser Zuordnung die Preisinformation mit einem Geldbetrag ermittelt, die den empfangenen Angebotsinformationen und/oder eindeutigen Angebots-Identifikationen zugeordnet ist.

9. Verfahren nach einem der Ansprüche 1 bis 8,
**dadurch gekennzeichnet,**
**dass** der Freigabecode einmalig zur Freigabe des Angebots nutzbar ist.

10. Verfahren nach Anspruch 9,
**dadurch gekennzeichnet,**
**dass** der Freigabecode für ein definiertes Zeitintervall nutzbar ist.

11. Verfahren nach Anspruch 9,
**dadurch gekennzeichnet,**
**dass** der Freigabecode Informationen enthält, durch die er nach einmaliger Nutzung als ungültig **gekennzeichnet** wird.

12. Transaktionssystem zum Bezahlen eines Angebots, wenigstens umfassend eine Kunden-Datenverarbeitungsanlage (11), eine Anbieter-Datenverarbeitungsanlage (21) und eine Bezahl-Datenverarbeitungsanlage (31), die über ein Datennetz miteinander verbindbar sind,
**dadurch gekennzeichnet,**
**dass** die Kunden-Datenverarbeitungsanlage (11), die Anbieter-Datenverarbeitungsanlage (21) und die Bezahl-Datenverarbeitungsanlage (31) jeweils Mittel zur Durchführung eines Verfahrens zum Bezahlen eines Angebots gemäß einem der Ansprüche 1 bis 11 aufweisen.
